# FASCICULE DE BREVET EUROPEEN

(11) **EP 2 263 985 B1**
(45) Date de publication et mention de la délivrance du brevet: **11.12.2013**
(21) Numéro de dépôt: 10166116.3
(22) Date de dépôt: 16.06.2010
(51) Int. Cl.: C04B 28/10, C04B 28/12, C04B 28/18

(54) **Matériau composite de construction incorporant de la chenevotte de chanvre**
Kompositbaumaterial beinhaltend Hanfschäbe
Composite material for construction comprising hemp stems

(30) Priorité: 16.06.2009 FR 0954049
(43) Date de publication de la demande: 22.12.2010
(73) Titulaire: Euraval, 64230 Lescar (FR); Université Paul Sabatier Toulouse III, 31062 Toulouse Cedex 9 (FR)
(72) Inventeur: Gazagnes, Eric, 31570, LANTA (FR); Magniont, Camille, 31077, TOULOUSE (FR); Escadeillas, Gilles, 31280, AIGREFEUILLE (FR)
(74) Mandataire: Hartmann, Jean-Luc

(56) Documents cités:
- EP-A1- 1 108 696
- WO-A1-2005/042430
- WO-A1-2009/019479
- FR-A1- 2 826 360
- FR-A1- 2 923 242
- Eires. R. et al: "New Eco-Friendly Hybrid Composite Materials for Civil Construction" 31 août 2006 (2006-08-31), XP002563803 Extrait de l'Internet: URL:http://repositorium.sdum.uminho.pt/bit stream/1822/5894/1/Art.%20Rute%20Eires%20F ran%C3%A7a%20Agosto06.pdf [extrait le 2009-01-18]

## Description

La présente invention se rapporte au domaine de l'écoconstruction. Plus précisément, elle concerne un matériau composite de construction respectueux de l'environnement, comprenant une partie liante associée à des granulats de chènevotte de chanvre. Un procédé d'obtention d'un tel matériau est également un objet de la présente invention.

### Domaine de l'invention

L'évolution de la construction, dans un contexte général de développement durable, tend à se faire à la fois dans le respect des ressources naturelles (en privilégiant les ressources renouvelables), des économies d'énergie (à la fois à la fabrication et surtout lors de l'utilisation), et de la santé et du confort (aussi bien des personnes chargées de la mise en oeuvre que de l'usager final). Enfin, le devenir du matériau en fin de vie doit se faire sans engendrer de nouveaux déchets non réutilisables. Dans cette optique, il est essentiel de disposer de matériaux de construction à la fois résistants et non polluants.

### Art antérieur

Pour répondre à ces problématiques, l'utilisation de végétaux dans les matériaux de construction, en remplacement de la totalité ou d'une partie des granulats naturels issus de gravières ou de carrières, est une alternative qui se développe de plus en plus. En effet, si du point de vue mécanique elle peut parfois être pénalisante, elle se révèle très positive des points de vue thermique et phonique. A titre d'illustration on peut citer des matériaux de construction du type béton ou mortier comprenant une partie liante de nature variée, principalement à base de chaux hydrauliques ou aériennes mélangée à de la matière végétale broyée comme par exemple du lin, de la paille de céréale, du bambou, etc... Dans ces matériaux, les végétaux sont présents dans des proportions variables, sous forme de particules ou de fibres végétales dotées de caractéristiques spécifiques qui dépendent de la nature du végétal utilisé.

Ce genre de matériaux dits « écologiques » présente des inconvénients en terme de fabrication. L'approvisionnement en matière végétale peut représenter une première difficulté, notamment l'extraction et la mise en forme de cette matière peuvent être plus ou moins complexes et donc coûteuses. Dans la plupart des cas, le mélange de la partie liante avec la matière végétale n'est pas réalisé de manière reproductible, les granulats se présentant sous forme de fibres de densité et de taux d'humidité variable, ce qui ne permet pas d'obtenir une association homogène avec les composants du liant. De fait, un rapport eau/liant élevé est nécessaire pour permettre le mélange de tous les composants.

Une difficulté importante réside dans la détermination de la composition du liant afin d'obtenir la meilleure cohésion avec les matières végétales incorporées. En fonction de la nature des fibres végétales, de leur forme et de leurs dimensions, l'association avec la partie liante du matériau est plus ou moins homogène et se fait de manière plus ou moins rapide. L'intérêt de déterminer la bonne formulation de liant, de manière à préserver les qualités propres de la matière végétale tout en complétant celles-ci par des propriétés d'adhésion et de maintien est d'autant plus important que c'est un élément clef qui influence le procédé de fabrication de ces matériaux de construction.

Les propriétés physiques des matériaux composites ainsi obtenus sont elles-mêmes très irrégulières. La résistance mécanique des produits finaux est notamment peu satisfaisante et ne permet pas l'utilisation de ces matériaux pour la réalisation de structures de soutien. Des exemples de matériaux composites intégrant des matières végétales issues du liège, de la pulpe de cellulose ou du chanvre sont décrits par Eires. R. et al (« New eco-friendly hybrid composite materials for civil construction », publié le 31 août 2006). Ces matériaux sont présentés comme d'excellents isolants thermiques et phoniques, à utiliser uniquement dans des éléments de construction non structuraux, sans fonction de support.

En terme de temps de préparation, il est nécessaire d'attendre le durcissement du mélange liant/granulats avant de pouvoir démouler les éléments de construction par exemple sous forme de parpaing. Cette étape s'avère d'autant plus longue que le rapport eau/liant est élevé. Les temps de séchage sont en général très longs et rendent impropre à une production industrielle l'utilisation de ces matériaux composites.

Dans un souci de respect de l'environnement, il est essentiel de mettre à profit des matières végétales disponibles en grande quantité, facilement utilisables et de préférence issues de filières industrielles déjà existantes en tant que produits secondaires ou « déchets »/ « rebuts » d'exploitations entreprises en masse par l'homme. A cet égard, de nombreuses productions agricoles existent à travers lesquelles, sont émis en grandes quantités des produits dérivés non valorisés dont la conversion ou la simple élimination pose des problèmes.

Parmi ces produits agricoles peu ou pas valorisés, l'exploitation du chanvre (Cannabis Sativa), cultivé de plus en plus intensivement pour sa fibre textile et sa graine oléagineuse, génère des quantités importantes d'un produit secondaire appelé chènevotte. La chènevotte est la partie centrale fragmentée de la tige de chanvre dont elle représente 60 % du poids sec. En dépit de certains avantages liés à sa faible densité et son pouvoir isolant élevé, ce matériau est peu valorisé, ceci malgré une production qui nécessite peu d'interventions chimiques, ne demande pas d'irrigation et n'appauvrit pas les sols, bien au contraire (excellente tête d'assolement).

Des matériaux de construction comprenant une partie liante associée à des matières issues de l'exploitation du chanvre existent. Ces matériaux utilisent en général majoritairement la partie « noble » de la tige de chanvre, produit le plus valorisable notamment pour ses propriétés fibreuses et sa grande résistance mécanique. Malgré des atouts naturels en terme d'isolation thermique et phonique, de comportement élastique, ce qui confère au matériau composite des propriétés avantageuses sur le plan de la résistance aux secousses (notamment sismiques), ces matériaux n'ont pas été développés en raison d'autres inconvénients touchant à leur procédé de fabrication et aux qualités finales du produit obtenu.

La forte capacité d'absorption d'eau de la fibre de chanvre rend en effet difficile son mélange avec la partie liante du matériau. Elle retarde en outre de manière significative le temps de séchage du matériau composite. Il n'a pas été déterminé jusqu'à présent de composition de liant permettant d'obtenir un mélange rapide et homogène afin de bénéficier des propriétés avantageuses du chanvre et préserver les qualités environnementales du matériau, notamment sans recourir à l'utilisation de ciment qui pose inévitablement des problèmes d'élimination des déchets et vient en opposition avec la volonté affichée de respect de la nature.

Pour profiter totalement dans la construction des apports bénéfiques des végétaux ou parties de végétaux tels que le chanvre, il convient en effet d'y associer un liant respectueux de l'environnement, économique et facile à mettre en oeuvre, et qui améliore aussi les propriétés hygroscopiques, thermiques et phoniques des ouvrages. Ce liant doit être stable vis-à-vis des sollicitations hydriques ou thermiques environnantes.

Le matériau de construction final doit être en accord avec les besoins et les réglementations actuels (réglementation thermique entre autres). Il doit permettre la réalisation de blocs monomur porteurs permettant d'assurer à la fois les propriétés mécaniques (sans être couplé avec une ossature bois par exemple), thermiques (sans apport d'isolant complémentaire), hydriques (perméable à la vapeur d'eau) et phoniques.

Il n'existe pas aujourd'hui ce type de produit sur le marché, seuls des blocs non porteurs pour l'essentiel et/ou des blocs avec des liants moins "écologiques" à faible capacité de confort hygrothermique sont actuellement vendus.

### Brève description de l'invention

La présente invention vise à pallier les inconvénients de l'art antérieur et propose un matériau composite de construction offrant des propriétés de résistance mécanique, hydrique, thermique et phonique comparables à celles de matériaux de constructions classiques, tout en répondant à la problématique environnementale par l'incorporation d'agroressources qui en font un matériau écologique. Par l'utilisation de produits dérivés de la culture du chanvre, la présente invention permet d'associer à un liant spécifiquement déterminé une matière végétale abondante et aux propriétés intrinsèques avantageuses pour la fabrication d'un matériau composite de construction respectant l'environnement.

La difficulté réside dans la maîtrise des contraintes liées à l'utilisation de granulats de chènevotte de chanvre caractérisés par une capacité de rétention d'eau très élevée, mais qui de ce fait, procure des avantages potentiels intéressants en terme d'isolation thermique et phonique ainsi que du point de vue du poids du matériau. L'autre contrainte forte est liée au fait que les granulats de chènevotte en eux-mêmes ne disposent pas d'une résistance mécanique avantageuse, cette lacune doit donc être compensée par les qualités intrinsèques de la composition liante et de son procédé de mise en oeuvre.

La composition mise au point par le demandeur présente en effet également des avantages sur le plan du procédé de fabrication, que ce soit en terme de simplicité de fabrication, de temps de séchage et de facilité de démoulage du matériau composite obtenu.

### Description détaillée

De manière plus précise, la présente invention consiste en un matériau composite de construction **caractérisé en ce qu**'il est composé d'un liant comprenant 45 à 70 % en masse de liant d'une chaux naturelle et 30 à 50 % en masse de liant de métakaolin, ledit liant étant associé à des granulats de chènevotte de chanvre présents à hauteur de 15 à 30 % en masse sèche de liant, avec un rapport eau/liant compris entre 0,5 et 1,5.

Le liant présent dans le matériau composite de construction selon l'invention comprend ainsi de la chaux naturelle obtenue par calcination d'une roche composée essentiellement de carbonate de calcium et, selon le gisement, d'éléments qui lors de la cuisson se transforment en silicates et aluminates de calcium. Il peut s'agir d'une chaux aérienne ou hydraulique naturelle. Pour obtenir un matériau composite aux propriétés mécaniques optimisées, on choisit, de préférence, une chaux hydraulique naturelle comme par exemple, une chaux du type NHL 5 (SOCLI). De préférence, le liant selon la présente invention comprend 55 à 70 % en masse de liant de chaux naturelle.

Le métakaolin présent dans le matériau composite de construction selon l'invention est un matériau artificiel issu de la cuisson entre 650 et 800 °C de kaolin broyé. Il est composé principalement d'alumine et de silice amorphe. Il possède un caractère pouzzolanique et réagit ainsi avec l'hydroxyde de calcium de la chaux. Il peut être obtenu, par exemple, par calcination flash de kaolin (ARGECO, Fumel). De préférence, le liant selon la présente invention comprend 30 à 40 % en masse de liant de métakaolin.

Associés à la partie liante, les granulats de chènevotte de chanvre sont obtenus à l'issue d'un procédé de défibrage industriel consistant en des étapes successives de broyage, calibrage et dépoussiérage. La chènevotte est la partie centrale de la tige de chanvre composée de faisceaux libéro-ligneux. A titre d'illustration, les granulats de chènevotte utilisés selon l'invention comprennent en moyenne 12 % d'eau, 45 à 55 % de cellulose, 15 à 20 % d'hémicellulose, 20 à 25 % de lignine et 4 % de minéraux.

Il a été observé que pour des pourcentages de granulats de chènevotte de chanvre compris aux alentours de 20 % en masse sèche de liant, les résistances mécaniques des matériaux composites obtenus étaient particulièrement élevées, ce qui permettait notamment l'utilisation de ces matériaux en tant que blocs autoporteurs. Lorsque le pourcentage de granulats de chènevotte de chanvre est plus proche de 25 % en masse sèche de liant, les résistances mécaniques des matériaux composites, tout en restant à un niveau élevé, se prêtent plus à une utilisation en tant que blocs non porteurs.

Dans le but d'améliorer encore les propriétés mécaniques du matériau composite selon l'invention, il est possible de substituer une partie des granulats de chènevotte de chanvre par des granulats minéraux du type sable ou gravillon, dans la limite du pourcentage compris entre 15 et 30 % en masse sèche de liant. Ce complément peut être effectué dans un mode de réalisation particulier de l'invention, afin de conforter la performance du matériau composite sans pour autant être à l'origine des résistances mécaniques hors normes observées, celles-ci reposant de manière fondamentale sur la seule association des granulats de chènevotte de chanvre avec le liant.

Sur le plan dimensionnel, les granulats de chènevotte utilisés selon l'invention se présentent sous la forme de particules allongées de forme grossièrement parallélépipédique de 1 à 4 mm de côté et de 4 à 12 mm de longueur. Cette granulométrie peut être obtenue par tamisage. De préférence, les granulats de chènevotte selon l'invention ont une capacité de rétention d'eau comprise entre 350 et 420 %. Cette caractéristique est d'autant plus surprenante qu'elle constitue en règle générale un inconvénient qui empêche le bon mélange de la partie liante avec la matière végétale. En effet, en raison de cette forte rétention d'eau, il est usuellement particulièrement difficile d'obtenir un mélange homogène entre la chènevotte, qui absorbe toute l'eau, et le liant qui s'humidifie mal et ne peut pas jouer son rôle de facteur de cohésion. Pour obtenir un tel mélange, il est donc habituellement nécessaire d'augmenter dans des proportions très importantes le rapport eau/liant (qui peut aller jusqu'à 3 voire 4) et de recourir à des étapes de pré-humidification de la matière végétale.

Mais dans la présente invention, cette caractéristique est utilisée comme un avantage à tel point que c'est précisément la partie du chanvre présentant la plus forte capacité de rétention d'eau, à savoir la chènevotte, qui est choisie. Sans pouvoir expliquer totalement ce phénomène, il semble que cette caractéristique soit liée à la structure interne de la chènevotte de chanvre qui présente des espaces libres conférant une macroporosité à la matière végétale. Les espaces libres ou pores de la chènevotte de chanvre sont d'une dimension plus importante que dans les autres variétés végétales utilisables pour la fabrication de tels matériaux composites de construction. Ils peuvent ainsi emprisonner une partie d'air plus importante, ce qui confère des propriétés d'isolations thermique et phonique très performantes ainsi qu'une légèreté remarquable.

Pour autant et malgré le caractère hydrophile de la chènevotte de chanvre, le rapport eau/liant selon la présente invention est étonnamment faible. Ceci résulte du procédé mis au point par le demandeur avec une succession d'étapes particulières qui empêchent l'absorption d'eau dans des quantités trop importantes par les granulats de chènevotte, tout en permettant un mélange homogène de la phase liante avec les granulats végétaux. Le respect de la proportion d'eau par rapport au liant est donc une caractéristique essentielle du matériau composite de construction selon l'invention, elle permet notamment d'assurer le niveau de viscosité recherché pour faciliter le mélange des différents composés, leur bonne cohésion et optimiser le démoulage du produit fini, ceci sans représenter un obstacle en terme de manipulation du mélange et de séchage du matériau fini. De manière préférée, le rapport eau/liant selon la présente invention est compris entre 0,6 et 0,9.

Dans un mode particulier de réalisation de l'invention, le matériau composite de construction selon l'invention peut comprendre en outre 0,5 à 2 % en masse sèche de liant d'un durcisseur hydrofuge réducteur de retrait. De préférence, il s'agit d'un carbonate de glycérol présent à hauteur de 1 à 1,5 %. Le degré de pureté du carbonate de glycérol utilisé dans le cadre de la présente invention peut être variable. Cet adjuvant est obtenu par saponification d'huile végétale. Sa fonction consiste en un effet durcisseur et hydrofuge, assurant tout à la fois une meilleure « dureté » du matériau de construction et un meilleur comportement à la reprise d'humidité.

Ce composant est particulièrement intéressant dans la présente invention car il répond totalement à la problématique environnementale recherchée, son origine étant végétale. Sa présence permet en outre d'améliorer la vitesse de « prise » du matériau composite en accélérant la réaction pouzzolanique qui intervient entre les hydroxydes de calcium de la chaux hydratée et le métakaolin. Se faisant, il permet au matériau composite d'acquérir très rapidement des niveaux de résistance mécanique comparables à des bétons à base de ciment (supérieure au MégaPascal au bout d'une semaine), tout en restant « écologique ».

Le matériau composite de construction selon l'invention peut également comporter un entraîneur d'air présent à hauteur de 0 à 1 %, de préférence 0 à 0,75 % en masse sèche de liant. Il s'agit en général de molécules amphiphiles, de préférence d'origine végétale. Cet autre adjuvant, bien connu de l'homme du métier, procure une protection efficace contre les cycles gel/dégel et provoque un effet plastifiant dans le béton frais.

Enfin, un accélérateur de durcissement peut également être ajouté à la composition liante selon la présente invention. Ce composé est de préférence d'origine minérale comme le chlorure de calcium par exemple. Il vise à améliorer le temps de prise ainsi que la résistance du matériau de construction obtenu par le mélange du liant avec les granulats de chènevotte de chanvre.

Un autre objet de la présente invention concerne un procédé de fabrication d'un matériau composite de construction **caractérisé en ce qu**'il comprend dans un premier temps le mélange d'un liant comprenant 45 à 70 %, de préférence 55 à 70 % en masse de liant d'une chaux naturelle, de préférence une chaux hydraulique naturelle, et 30 à 50 %, de préférence 30 à 40 % en masse de liant de métakaolin, avec des granulats de chènevotte de chanvre représentant 15 à 30 % en masse sèche de liant, le tout étant homogénéisé avant d'ajouter l'eau selon un rapport eau/liant compris entre 0,5 et 1,5, de préférence, 0,6 à 0,9.

Il est important de réaliser d'abord le mélange pulvérulent des composants solides du matériau composite selon l'invention. L'ordre d'incorporation de la chaux, du métakaolin ou des granulats de chènevotte peut varier, mais ceux-ci doivent être bien mélangés entre eux, de manière la plus homogène possible avant d'ajouter l'eau. Ceci permet d'éviter la formation de grumeaux d'une part. D'autre part, les granulats de chènevotte mélangés à la chaux et au métakaolin deviennent moins hydrophiles, leur surface étant recouverte par les particules de chaux et de métakaolin, ils absorbent moins d'eau et se mélangent beaucoup plus facilement avec le reste de la composition sans qu'il soit nécessaire d'utiliser des quantités trop importantes d'eau, sans étape préalable de pré-humidification des granulats de chènevotte, et sans recourir à d'autres composants chimiques du type ciment qui ont un caractère polluant.

Pour autant, les granulats de chènevotte conservent leurs propriétés avantageuses en termes d'isolations thermique et phonique et de faible densité car ils n'ont pas été saturés d'eau. L'eau qui est introduite selon le procédé objet de l'invention est pleinement utilisée par le liant qui peut alors jouer son rôle de facteur de cohésion des granulats végétaux. En étant introduite selon un rapport aussi faible, l'eau ne ralentit pas la vitesse de séchage du matériau composite. L'ensemble de la composition reste facilement manipulable grâce à une bonne viscosité. Le démoulage du matériau est également facilité.

Le procédé selon l'invention permet ainsi d'obtenir un matériau composite de construction aux propriétés avantageuses en termes de résistance mécanique, d'isolations thermique et phonique et de démoulage, tout en restant « écologique ».

Des adjuvants tels qu'un durcisseur hydrofuge réducteur de retrait comme le carbonate de glycérol et/ou un entraîneur d'air peuvent être incorporés à hauteur de 0,5 à 2 % et 0 à 1 % en masse sèche de liant respectivement. Un accélérateur de durcissement peut également être ajouté. Ceux-ci sont ajoutés au même moment ou après l'incorporation d'eau.

Les granulats de chènevotte de chanvre peuvent être incorporés en association avec des granulats minéraux du type sable ou gravillon, dans la limite de 15 à 30 % en masse sèche de liant.

Dans un mode particulier de réalisation du procédé selon l'invention, celui-ci peut comprendre avant leur mélange avec le liant, une étape préalable de tamisage des granulats de chènevotte de chanvre permettant de sélectionner des particules allongées de dimensions comprises entre 1 à 4 mm de côté et 4 à 12 mm de longueur.

Une étape de mise en place dudit matériau composite de construction par vibrocompactage après mélange du liant et des granulats de chènevotte peut également être apportée selon l'invention ceci afin d'améliorer la répartition et le mélange des granulats de chènevotte. Il s'agit là d'un avantage considérable du procédé selon l'invention qui résulte directement de la composition et des proportions du matériau composite revendiqué, et plus particulièrement de son faible rapport eau/liant. La présence d'eau n'étant pas trop importante, contrairement aux matériaux composites de l'art antérieur, la composition selon l'invention peut être mise en forme par vibrocompactage et n'est plus limitée à des techniques de mise en forme par coulage (du fait d'une trop grande fluidité). Ceci permet d'envisager une production à l'échelle industrielle de matériau composite de construction. Il est également possible de les préfabriquer de manière à les transporter et les utiliser encore plus rapidement au niveau des sites de construction.

Enfin, le matériau composite mis en forme peut être conservé à température moyenne de 20 °C et 65 % d'humidité relative afin de préserver au maximum ses propriétés avantageuses à long terme.

L'utilisation d'un matériau composite de construction obtenu selon la présente invention est particulièrement indiquée pour la construction de structures ou d'éléments de structures respectueuses de l'environnement.

Les propriétés et avantages du matériau composite de construction et son procédé selon la présente invention apparaîtront plus clairement à la lueur des exemples qui suivent. Ceux-ci sont donnés à titre purement illustratif et ne doivent pas être interprétés comme une quelconque limitation de la portée de l'invention qui s'étend notamment aux moyens équivalents à ceux qui sont décrits dans la présente demande.

### EXEMPLES

### Exemple 1 : Fabrication d'un matériau composite de construction selon l'invention

Préalablement, la paille de chanvre est récoltée puis stockée jusqu'à 18 mois. Elle est ensuite défibrée, broyée et dépoussiérée avant d'être calibrée par tamisage en petites particules allongées constituant les granulats de chènevotte de chanvre, de dimensions comprises entre 1 à 4 mm de côté et 4 à 12 mm de longueur.

Un liant est réalisé dans un malaxeur par le mélange de 62,5 % de chaux hydraulique naturelle NHL 5 (SOCLI) et 37,5 % de métakaolin (ARGECO). Les granulats de chènevotte sont ensuite introduits dans le malaxeur à hauteur de 25 % en masse sèche du liant préalablement obtenu. Le tout est mélangé de manière homogène. 1 % en masse sèche de liant de carbonate de glycérol est ensuite incorporé en même temps que 0,5 % d'un entraîneur d'air G500 (Chryso). L'eau est finalement ajoutée selon un rapport eau/liant égal à 0,75. Le tout est à nouveau mélangé de manière homogène.

La composition ainsi obtenue est ensuite versée dans un moule de 9 litres de dimensions 10 x 20 x 50 cm contenant 11 alvéoles. La composition est mise en place par vibrocompactage puis démoulée immédiatement en un bloc. Le démoulage est obtenu très facilement, avec des moulures parfaites, une homogénéité sur toute la hauteur et un aspect visuel proche d'un bloc de béton « classique ». Il est conservé dans une salle à 20 °C et 60 % d'humidité relative, sans étuvage.

### Exemple 2: Caractérisation des propriétés physiques d'un matériau composite selon l'invention

Des essais de résistances mécaniques en compression ont été réalisés sur un matériau composite selon l'invention identique à l'exemple 1. Les résultats sont les suivants :

| **Echéance** | **Masse volumique (Kg/m³)** | **Rc (MPa)** |
|---|---|---|
| **7 jours** | 764 | 1,2 |
| **28 jours** | 658 | 2 |
| **91 jours** | 660 | 2,8 |

Des essais de caractérisations thermique et phonique ont également été réalisés :
- la conductivité thermique a été mesurée sur un matériau composite plein (sans alvéoles) selon la norme EN 12667. Le coefficient de conductivité thermique à 25 °C est environ de 0,113 W.m⁻¹.K⁻¹.
- le coefficient d'absorption acoustique a été mesuré selon la norme NF EN ISO 10534-1 sur des éprouvettes de 9,8 cm de diamètre et 4 cm d'épaisseur. Les propriétés acoustiques du matériau selon l'invention ont été mesurées sur la gamme de fréquences 350 Hz-2000Hz.

## Revendications

1. Matériau composite de construction ***caractérisé en ce qu'**il* comprend un liant comprenant 45 à 70 % en masse de liant d'une chaux naturelle et 30 à 50 % en masse de liant de métakaolin, ledit liant étant associé à des granulats de chènevotte de chanvre présents à hauteur de 15 à 30 % en masse sèche de liant, avec un rapport eau/liant compris entre 0,5 et 1,5.

2. Matériau composite de construction selon la revendication 1, ***caractérisé en ce que*** la chaux est une chaux hydraulique naturelle.

3. Matériau composite de construction selon la revendication 1 ou 2, ***caractérisé en ce* qu'**il comprend en outre 0,5 à 2 % en masse sèche de liant d'un carbonate de glycérol.

4. Matériau composite de construction selon l'une quelconque des revendications précédentes, ***caractérisé en ce qu'**il* comprend en outre 0 à 1 % en masse sèche de liant d'un entraîneur d'air.

5. Matériau composite de construction selon l'une quelconque des revendications précédentes, ***caractérisé en ce qu'**il* comprend en outre un accélérateur de durcissement.

6. Matériau composite de construction selon l'une quelconque des revendications précédentes, ***caractérisé en ce que*** les granulats de chènevotte de chanvre sont associés à des granulats minéraux, dans la limite du pourcentage compris entre 15 et 30 % en masse sèche de liant.

7. Matériau composite de construction selon l'une quelconque des revendications précédentes, ***caractérisé en ce que*** le liant comprend entre 55 et 70 % en masse de liant de chaux naturelle.

8. Matériau composite de construction selon l'une quelconque des revendications précédentes, ***caractérisé en ce que*** le liant comprend 30 à 40 % en masse de liant de métakaolin.

9. Matériau composite de construction selon l'une quelconque des revendications précédentes, ***caractérisé en ce que*** les granulats de chènevotte de chanvre se présentent sous la forme de particules allongées de dimensions comprises entre 1 à 4 mm de côté et 4 à 12 mm de longueur.

10. Matériau composite de construction selon l'une quelconque des revendications précédentes, ***caractérisé en ce que*** les granulats de chènevotte de chanvre ont une capacité de rétention d'eau comprise entre 350 et 420 %.

11. Procédé de fabrication d'un matériau composite de construction, ***caractérisé en ce* qu'**il comprend dans un premier temps le mélange d'un liant comprenant 45 à 70 % en masse de liant d'une chaux naturelle et 30 à 50 % en masse de liant de métakaolin, avec des granulats de chènevotte de chanvre représentant 15 à 30 % en masse sèche de liant, le tout étant homogénéisé avant d'ajouter l'eau selon un rapport eau/liant compris entre 0,5 et 1,5.

12. Procédé selon la revendication 11, ***caractérisé en ce qu'**il* comprend en outre l'incorporation de 0,5 à 2 % en masse sèche de liant d'un carbonate de glycérol.

13. Procédé selon la revendication 11 ou 12, ***caractérisé en ce qu'**il* comprend en outre l'incorporation de 0 à 1 % en masse sèche de liant d'un entraîneur d'air.

14. Procédé selon l'une quelconque des revendications précédentes, ***caractérisé en ce qu'**il* comprend en outre l'incorporation d'un accélérateur de durcissement.

15. Procédé selon l'une quelconque des revendications précédentes, ***caractérisé en ce qu'**il* comprend en outre l'incorporation de granulats minéraux associés aux granulats de chêne-votte de chanvre, dans la limite de 15 à 30 % en masse sèche de liant.

16. Procédé selon l'une quelconque des revendications précédentes, ***caractérisé en ce qu'**il* comprend, avant leur mélange avec le liant, une étape préalable de broyage suivi d'un tamisage des granulats de chènevotte de chanvre permettant de sélectionner des particules allongées de dimensions comprises entre 1 à 4 mm de côté et 4 à 12 mm de longueur.

17. Procédé selon l'une quelconque des revendications précédentes, ***caractérisé en ce qu'**il* comprend une étape de mise en place dudit matériau composite de construction par vibro-compactage après mélange du liant et des granulats de chènevotte.

18. Procédé selon l'une quelconque des revendications précédentes, ***caractérisé en ce que*** le matériau composite mis en forme est conservé à température moyenne de 20 °C et 65 % d'humidité relative.

19. Utilisation d'un matériau composite de construction obtenu selon l'une des revendications 11 à 18 pour la construction de structure ou d'éléments de structure respectueuses de l'environnement.

## Patentansprüche

1. Verbundbaumaterial,
**dadurch gekennzeichnet,**
**dass** es ein Bindemittel mit 45 bis 70 Massen-% eines Bindemittels von einem natürlichen Kalk und 30 bis 50 Massen-% eines Bindemittels von Metakaolin enthält, wobei das Bindemittel mit Hanfgranulaten verbunden ist, die in einer Menge von 15 bis 30% bezogen auf die Trockenmasse des Bindemittels vorliegen, mit einem Verhältnis Wasser/Bindemittel zwischen 0,5 und 1,5.

2. Verbundbaumaterial nach Anspruch 1,
**dadurch gekennzeichnet,**
**dass** der Kalk ein natürlicher hydraulischer Kalk ist.

3. Verbundbaumaterial nach Anspruch 1 oder 2,
**dadurch gekennzeichnet,**
**dass** es zudem 0,5 bis 2% Glycerincarbonat bezogen auf die Trockenmasse des Bindemittels enthält.

4. Verbundbaumaterial nach einem der vorstehenden Ansprüche,
**dadurch gekennzeichnet,**
**dass** es zudem 0 bis 1% eines Luftporenbildners bezogen auf die Trockenmasse des Bindemittels enthält.

5. Verbundbaumaterial nach einem der vorstehenden Ansprüche,
**dadurch gekennzeichnet,**
**dass** es zudem einen Härtungsbeschleuniger enthält.

6. Verbundbaumaterial nach einem der vorstehenden Ansprüche,
**dadurch gekennzeichnet,**
**dass** die Hanfgranulate mit mineralischen Granulaten in einem Grenzprozentsatz zwischen 15 und 30% bezogen auf die Trockenmasse des Bindemittels verbunden sind.

7. Verbundbaumaterial nach einem der vorstehenden Ansprüche,
**dadurch gekennzeichnet,**
**dass** das Bindemittel zwischen 55 und 70 Massen-% an natürlichem Kalk enthält.

8. Verbundbaumaterial nach einem der vorstehenden Ansprüche,
**dadurch gekennzeichnet,**
**dass** das Bindemittel 30 bis 40 Massen-% an Metakaolin enthält.

9. Verbundbaumaterial nach einem der vorstehenden Ansprüche,
**dadurch gekennzeichnet,**
**dass** die Hanfgranulate in der Form länglicher Teilchen mit Abmessungen zwischen 1 bis 4 mm in der Breite und 4 bis 12 mm in der Länge vorliegen.

10. Verbundbaumaterial nach einem der vorstehenden Ansprüche,
**dadurch gekennzeichnet,**
**dass** die Hanfgranulate eine Wasserrückhaltekapazität zwischen 350 und 420% aufweisen.

11. Verfahren zur Herstellung eines Verbundbaumaterials,
**dadurch gekennzeichnet,**
**dass** es zunächst die Mischung eines Bindemittels mit 45 bis 70 Massen-% des Bindemittels an natürlichem Kalk und 30 bis 50 Massen-% des Bindemittels an Metakaolin aufweist, mit Hanfgranulaten, die 15 bis 30 Trockenmassen-% des Bindemittels bilden, und das Ganze homogenisiert wird bevor Wasser in einem Verhältnis Wasser/Bindemittel zwischen 0,5 und 1,5 hinzugefügt wird.

12. Verfahren nach Anspruch 11,
**dadurch gekennzeichnet,**
**dass** es zudem die Aufnahme von 0,5 bis 2 Trockenmassen-% eines Glycerincarbonats bezogen auf das Bindemittel aufweist.

13. Verfahren nach Anspruch 11 oder 12,
**dadurch gekennzeichnet,**
**dass** es zudem die Aufnahme von 0 bis 1% eines Luftporenbildners bezogen auf die Trockenmasse des Bindemittels enthält.

14. Verfahren nach einem der vorstehenden Ansprüche,
**dadurch gekennzeichnet,**
**dass** es zudem die Aufnahme eines Härtungsbeschleunigers enthält.

15. Verfahren nach einem der vorstehenden Ansprüche,
**dadurch gekennzeichnet,**
**dass** es zudem die Aufnahme von mineralischem Granulaten, die mit Hanfgranulaten bis zu einer Grenze von 15 bis 30 Trockenmassen-% des Bindemittels verbunden sind, enthält.

16. Verfahren nach einem der vorstehenden Ansprüche,
**dadurch gekennzeichnet,**
**dass** es vor dessen Mischung mit dem Bindemittel eine vorherige Zerkleinerungsstufe gefolgt von einem Sieben der Hanfgranulate aufweist, die es erlaubt, längliche Teilchen mit Abmessungen von 1 bis 4 mm in der Breite und 4 bis 12 mm in der Länge auszuwählen.

17. Verfahren nach einem der vorstehenden Ansprüche,
**dadurch gekennzeichnet,**
**dass** es die Stufe der Bereitstellung des Verbundbaumaterials durch Vibrationsverdichtung nach der Vermischung des Bindemittels und der Hanfgranulate aufweist.

18. Verfahren nach einem der vorstehenden Ansprüche,
**dadurch gekennzeichnet,**
**dass** das in Form gebrachte Verbundbaumaterial bei einer mittleren Temperatur von 20 ºC und 65 % relativer Luftfeuchtigkeit konserviert wird.

19. Verwendung eines Verbundbaumaterials erhalten durch einen der Ansprüche 11 bis 18 für den Strukturaufbau oder für umweltfreundliche Strukturelemente.

## Claims

1. Composite material for construction **characterised in that** it comprises a binder comprising 45 to 70 mass % of a natural lime binder and 30 to 50 mass % of metakaolin binder, the said binder being associated with granulates of hemp chaff present as 15 to 30 dry mass % of binder, and a ratio of water to binder lying between 0.5 and 1.5.

2. Composite material for construction according to claim 1, **characterised in that** the lime is a natural hydraulic lime.

3. Composite material for construction according to claim 1 or 2, **characterised in that** it comprises in addition 0.5 to 2 dry mass % of binder of a glycerol carbonate.

4. Composite material for construction according to any one of the preceding claims, **characterised in that** it comprises in addition 0 to 1 dry mass % of binder of an air carrier.

5. Composite material for construction according to any one of the preceding claims, **characterised in that** it comprises in addition a hardening accelerator.

6. Composite material for construction according to any one of the preceding claims, **characterised in that** the granulates of hemp chaff are associated with mineral granulates, up to a percentage lying between 15 and 30 dry mass % of binder.

7. Composite material for construction according to any one of the preceding claims, **characterised in that** the binder comprises between 55 and 70 mass % of natural lime binder.

8. Composite material for construction according to any one of the preceding claims, **characterised in that** the binder comprises 30 to 40 mass % of metakaolin binder.

9. Composite material for construction according to any one of the preceding claims, **characterised in that** the granulates of hemp chaff are present in the form of elongated particles of dimensions lying between 1 to 4 mm in breadth and 4 to 12 mm in length.

10. Composite material for construction according to any one of the preceding claims, **characterised in that** the granulates of hemp chaff have a water retention capacity of between 350 and 420%.

11. Fabrication process for a composite material for construction, **characterised in that** it comprises in a first phase the mixture of a binder comprising 45 to 70 mass % of binder of a natural lime and 30 to 50 mass % of metakaolin binder, with granulates of hemp chaff representing 15 to 30 dry mass % of binder, all being homogenised before the addition of water at a ratio of water to binder of between 0.5 and 1.5.

12. Process according to claim 11, **characterised in that** it comprises in addition the incorporation of 0.5 to 2 dry mass % of binder of a glycerol carbonate.

13. Process according to claim 11 or 12, **characterised in that** it comprises in addition the incorporation of 0 to 1 dry mass % of binder of an air carrier.

14. Process according to any one of the preceding claims, **characterised in that** it comprises in addition the incorporation of a hardening accelerator.

15. Process according to any one of the preceding claims, **characterised in that** it comprises in addition the incorporation of mineral granulates associated with granulates of hemp chaff, at 15 to 30 dry mass % of binder.

16. Process according to any one of the preceding claims, **characterised in that** it comprises, before they are mixed with the binder, a prior grinding stage followed by the screening of the granulates of hemp chaff allowing the selection of elongated particles of dimensions between 1 to 4 mm in breadth and 4 to 12 mm in length.

17. Process according to any one of the preceding claims, **characterised in that** it comprises a stage of putting in place the said composite material for construction by vibratory compacting after mixing the binder and the granulates of chaff.

18. Process according to any one of the preceding claims, **characterised in that** the formed composite material is kept at an average temperature of 20°C and 65% relative humidity.

19. Use of a composite material for construction obtained in accordance with any one of claims 11 to 18 for the construction of structures or structural elements which are environmentally friendly.
